# EUROPÄISCHE PATENTSCHRIFT

(11) **EP 0 818 072 B1**
(45) Veröffentlichungstag und Bekanntmachung des Hinweises auf die Patenterteilung: **04.08.1999**
(21) Anmeldenummer: 95937762.3
(22) Anmeldetag: 15.11.1995
(51) Int. Cl.: H02B 1/20, H02B 1/052

(54) **VORRICHTUNG ZUM ANSCHLUSS VON ELEKTRISCHEN INSTALLATIONSGERÄTEN**
DEVICE FOR CONNECTING ELECTRICAL-INSTALLATION APPARATUSES
DISPOSITIF PERMETTANT DE CONNECTER DES APPAREILS ELECTRIQUES D'INSTALLATION

(30) Priorität: 15.11.1994 DE 9418316 U
(43) Veröffentlichungstag der Anmeldung: 14.01.1998
(73) Patentinhaber: AEG Niederspannungstechnik GmbH, 31785 Hameln (DE)
(72) Erfinder: HEUSING, Reinhard, D-31840 Hessisch Oldendorf (DE); SCHLEGEL, Torsten, D-31848 Bad Münder (DE)
(74) Vertreter: Tiedtke, Harro, Dipl.-Ing.
(86) Internationale Anmeldenummer: DE9501586
(87) Internationale Veröffentlichungsnummer: WO9615569

(56) Entgegenhaltungen:
- EP-A- 0 434 964
- EP-A- 0 443 104
- EP-A- 0 467 171

## Beschreibung

Die vorliegende Erfindung bezieht sich auf eine Vorrichtung zum Anschluß von elektrischen Installationsgeräten in einem Stromkreisverteiler gemäß dem Anspruch 1.

Aus der EP-A-0 467 171 ist eine Vorrichtung zum Anschluß von elektrischen Installationsgeräten in einem Stromkreisverteiler bekannt. Beim Aufrasten der Installationsgeräte auf die Tragschiene wird jeweils selbsttätig der elektrische Kontakt zwischen den Anschlußfahnen der handelsüblichen Stiftsammelschiene und den betreffenden Steckanschlüssen hergestellt.

Stromkreisverteiler zur Aufnahme und zur Verschaltung von elektrischen Installationsgeräten, wie beispielsweise Leitungsschutzschaltern, Fehlerstromschutzschaltern, Fehlerstromschutzschaltern mit Überstromauslöser, Ausschaltern, Relais und sonstigen Reiheneinbaugeräten sind in verschiedenen Ausführungen bekannt. Besonders sogenannte Kleinverteiler haben ein Gehäuse mit zumeist mehreren, in vorgegebenen Abständen angeordneten genormten Tragschienen, auf die die Installationsgeräte nebeneinander mit einer Befestigungseinrichtung aufgerastet werden. Danach erfolgt der elektrische Anschluß vorwiegend an Schraubanschlußklemmen im seitlich vorstehenden Sockelbereich der Installationsgeräte. Aufgrund der genormten Teilungsmaße der verschiedenen Geräte werden dabei auf der Eingangsseite meist ein- oder mehrphasige Sammelschienen mit Gabel- oder Stiftanschlüssen verwendet. An diese lassen sich zumindest sämtliche gleichartigen Geräte einer Tragschiene auf der Eingangsseite mittels der Schraubklemmen manuell anschließen. Daneben ist aber auch die Einzelverdrahtung üblich, wie sie im allgemeinen auf der Ausgangsseite angewendet wird. Der Freiraum zwischen den Sockelbereichen der aufgereihten Installationsgeräte wird dann sehr eingeengt. so daß besonders bei dickeren Leiterquerschnitten das Verdrahten für den Elektroinstallateur schwierig durchzuführen ist.

Desweiteren sind Anschlußsysteme bekannt, bei denen die Eingangsseite der Installationsgeräte steckbar ausgebildet ist. Hierbei werden entweder Sonderausführungen von Installationsgeräten in entsprechend ausgebildete Stromkreisverteiler eingesetzt, oder es werden spezielle Sammelschienenträgersysteme und Geräte mit zusätzlichen Steckanschlüssen verwendet.

So ist aus der EP 0 434 964 A1 eine Anordnung zum Anschluß von Leitungsschutzschaltern bekannt, bei der die Schalter in einem Gehäuse auf einer Tragschiene angebracht sind. Die Leitungsschutzschalter haben Eingangs- und Ausgangsanschlußverbindungsglieder und an ihrer Unterseite eine jeweils damit elektrisch verbundene Buchse, in die Verbindungsstecker einer Leiste aus elektrisch leitendem Material einsteckbar sind. Bei der Leiste handelt es sich um ein Sonderteil, welches auf die mit den Eingangs- und Ausgangsanschlußverbindungsgliedern verbundene Buchse speziell angepaßt ist.

Ferner ist aus der EP 0 472 409 A1 ein Anschlußsystem für Leitungsschutzschalter bekannt, bei dem an der Unterseite der Gerätesockel Steckzungen weit hervorstehen. Der zugehörige Stromkreisverteiler ist mit besonderen Sammelschienen mit im Teilungsmaß angeordneten Einsteckkammern versehen, die über einen Federbügel bei eingesetztem Leitungsschutzschalter den elektrischen Kontakt zur jeweiligen Steckzunge herstellen. Die in dieser Druckschrift gezeigten Leitungsschutzschalter können nur in der vorgeschlagenen Kombination benutzt werden.

Der Erfindung liegt die Aufgabe zugrunde, eine Vorrichtung zum Anschluß von Installationsgeräten, insbesondere Leitungsschutzschaltern in Verbindung mit handelsüblichen Stiftsammelschienen in einem Stromkreisverteiler zu schaffen, mit der die Installationsgeräte wahlweise im Stecksystem und/oder im normalen Schraubsystem anschließbar sind, und auch der Stromkreisverteiler unabhängig von den verschiedenartigsten Installationsgeräten universell einsetzbar ist.

Diese Aufgabe wird durch eine Vorrichtung nach Anspruch 1 gelöst. Im Unteranspruch 2 ist eine Weiterentwicklung der Erfindung angegeben.

Die Erfindung hat den Vorteil, daß die Installationsgeräte mit lediglich geringem Mehraufwand bei der Herstellung neben der bisher üblichen Anschlußart mittels Schraubklemmen zusätzlich auch im Stecksystem angeschlossen werden können. Dabei müssen sich weder die äußere Erscheinungsform noch die Hauptabmessungen der Installationsgeräte ändern. Geräte mit dem zusätzlichen Steckanschluß sind daher vollkommen kompatibel zu den Geräten, die nur über einen Schraubanschluß verfügen.

Auch bei den Stromkreisverteilern sind nur geringe Änderungen erforderlich. Es müssen lediglich wenige positionsgerecht angeordnete Halterungen am Geräteträger des Verteilers angeformt werden. um die handelsübliche Stiftsammelschiene jeweils in die Bereiche neben der Tragschiene einzulegen. Ohne eingelegte Stiftsammelschiene lassen sie sich hingegen wie bisher übliche, der Norm entsprechende Verteiler gebrauchen. Installationsgeräte und Stromkreisverteiler sind daher in beliebiger Kombination untereinander verwendbar.

Wird jedoch das Stecksystem genutzt. so verringert sich beim Einbau und beim Verdrahten der Installationsgeräte der Arbeitsaufwand erheblich. Zwischen den einzelnen Gerätereihen ergibt sich bedeutend mehr Freiraum, der die Arbeit des Elektroinstallateurs wesentlich erleichtert. Pro Stiftsammelschiene ist dann jeweils nur noch die Einspeisung an der Schraubklemme eines Gerätes notwendig. um alle zugeordneten Installationsgeräte eingangsseitig anzuschließen. Damit entfällt auch die bei vielen Sammelschienensystemen notwendige zusätzliche Einspeisungsklemme.

Anhand der Zeichnung ist die Erfindung nachstehend an einem Ausführungsbeispiel näher erläutert.
- Fig. 1: zeigt die Vorrichtung lediglich beispielhaft in einer vereinfachten Seitenansicht, während in
- Fig. 2: gleichfalls schematisch die zugehörige Draufsicht mit einer lediglich teilweise bestückten Tragschiene wiedergegeben ist.

Bei der Vorrichtung sind in einem Stromkreisverteiler 1 mehrere Installationsgeräte 2, beispielsweise drei einpolige Leitungsschutzschalter, nebeneinander aufgereiht und auf einer Tragschiene 1.1 gehalten. Die Installationsgeräte haben zu diesem Zweck an der Unterseite ihres Gehäusesockels 2.1 eine lediglich angedeutete Befestigungseinrichtung 2.2. die auf bekannte Art auf die genormte, ein Hutprofil aufweisende Tragschiene 1.1 aufrastbar ist. Zumeist sind mehrere solcher Tragschienen 1.1 in durch Normen vorgegebenen Abständen parallel nebeneinander auf einem Traggerüst 1.2 angeordnet, welches seinerseits an einer Rückwand 1.3 des Stromkreisverteilers befestigt ist.

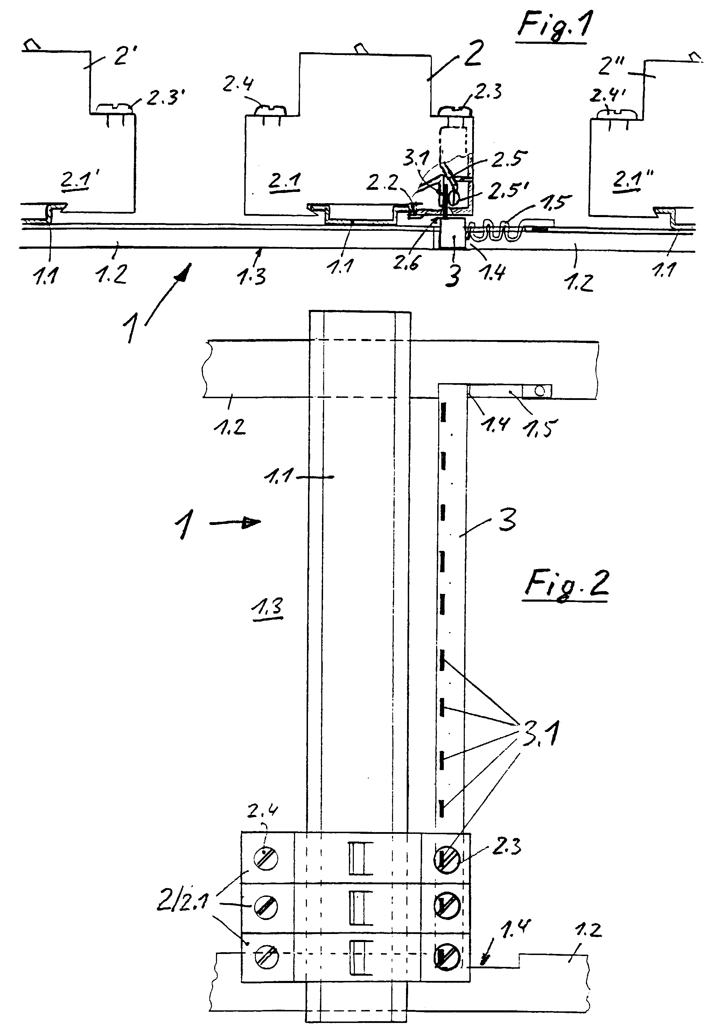

Wie in Fig. 1 anhand der auf benachbarten Tragschienen aufgereihten Installationsgeräte 2' bzw. 2" angedeutet ist, ergeben sich beiderseits der vorspringenden Gehäusesockel mit ihren standardmäßigen Schraubanschlußklemmen 2.3 bzw. 2.4 lediglich begrenzte Freiräume, insbesondere bei den sogenannten Kleinverteilern. Um diesen Freiraum jeweils zwischen zwei Gehäusesockeln überwiegend für die Einzelverdrahtung an der Ausgangsseite (Anschlußklemmen 2.4) nutzen zu können, werden auf der Eingangsseite (Anschlußklemmen 2.3) zumeist Sammelschienen verwendet, die die einander zugeordneten, gemeinsam auf einer Tragschiene aufgereihten Installationsgeräte leitend miteinander verbinden. In jede Sammelschiene braucht danach nur noch zentral eingespeist zu werden.

Bei der Vorrichtung sind nunmehr im Stromkreisverteiler 1 unterhalb der Installationsgeräte 2 Halterungen 1.4 angeordnet, die eine handelsübliche Stiftsammelschiene 3 gegebenenfalls auch nachträglich aufnehmen. Die Halterungen 1.4 sind vorzugsweise beiderseits am Traggerüst 1.2 angebracht oder unmittelbar an der Rückwand 1.3 angeformt. In die Halterungen 1.4 ist die gezeigte einphasige Stiftsammelschiene 3 lediglich mit ihren nach oben weisenden Anschlußfahnen 3.1 eingelegt. Dabei wird für die dann unterhalb der Gehäusesockel 2.1 befindliche Stiftsammelschiene 3 der vorhandene Raum neben der parallel zu ihr verlaufenden Tragschiene 1.1 und die Rahmenhöhe des Traggerüstes 1.2 optimal genutzt. Durch den Druck einer lediglich angedeuteten Feder 1.5 wird die Stiftsammelschiene in der Aufnahme 1.4 so fixiert, daß sie der Tragschiene 1.1 und damit auch den Installationsgeräten 2 lagerichtig zugeordnet ist. Ebenso ist es möglich, in die Halterungen 1.4 Stiftsammelschienen in mehrphasiger Ausführung einzulegen. Die nach oben in Richtung des Gehäusesockels weisenden Anschlußfahnen 3.1 liegen auch hierbei immer in einer Reihe nebeneinander und haben so jeweils den gleichen Abstand zur Tragschiene 1.1. Ein innerhalb der Installationsgeräte zur Kontaktierung der Anschlußfahnen 3.1 gebrauchter Steckanschluß läßt sich daher jeweils für alle Geräte an einer genau definierten Stelle anordnen.

Dieser Steckanschluß 2.5 ist bei den gezeigten Leitungsschutzschaltern verdeckt im Gehäusesockel 2.1, vorzugsweise direkt unterhalb der Eingangsklemme 2.3 angeordnet, und mit dieser elektrisch leitend verbunden. Dabei kann der Steckanschluß unmittelbar als Teil der Eingangsklemme ausgebildet sein, so daß sich ein einstückig handhabbares, in den Gehäusesockel einlegbares Bauteil ergibt. Eine Klemme mit Steckanschluß bedeutet daher gegenüber einer herkömmlichen Anschlußklemme kaum einen nennenswerten Mehraufwand.

Als Zugang zum Steckanschluß 2.5 ist an der Unterseite des Gehäusesockels eine Öffnung 2.6 ausgespart, deren Größe an den Querschnitt der Anschlußfahnen 3.1 angepaßt ist. Die sich nach außen hin trichterförmig erweiternde Öffnung 2.6 erleichtert das Aufsetzen des Installationsgerätes auf die Stiftsammelschiene 3 und zentriert diese zugleich auf der zugehörigen Anschlußfahne. Diese wird beim Aufsetzen des Installationsgerätes auf die Tragschiene 1.1 selbsttätig von dem Steckanschluß 2.5 kontaktiert. Eine gute und dauerhafte Kontaktgabe wird dabei beispielsweise durch eine lediglich angedeutete elastische Federzunge 2.5' des Steckkontaktes erreicht. Der gemeinsame Anschluß aller über eine Stiftsammelschiene elektrisch leitend verbundenen Installationsgeräte erfolgt zweckmäßigerweise über die Eingangsklemme 2.3 eines Installationsgerätes, so daß an der Stiftsammelschiene keine separate Einspeiseklemme vorgesehen werden muß. Da die Einspeisung zumeist am ersten Gerät einer Tragschiene, d. h. im Randbereich des Verteilers, erfolgt, kann praktisch der gesamte Freiraum zwischen benachbart aufgereihten Installationsgeräten für die Ausgangsverdrahtung genutzt werden.

## Patentansprüche

1. Vorrichtung zum Anschluß von elektrischen Installationsgeräten (2) in einem Stromkreisverteiler (1), auf dessen Tragschiene (1.1) die Installationsgeräte (2) in Reihenanordnung mechanisch aufrastbar und mittels eines Schraubanschluß- oder Stecksystems an Sammelschienen (3) eingangsseitig kontaktierbar sind und wobei die Installationsgeräte (2) jeweils neben den üblichen Schraubanschlußklemmen (2.3, 2.4) zusätzlich einen innerhalb ihres Gehäusesockels (2.1) verdeckt angeordneten, mit ihrer Eingangsklemme (2.3) leitend verbundenen Steckanschluß (2.5) aufweisen, und der elektrische Anschluß der Installationsgeräte (2) wahlweise über die Eingangsklemmen (2.3) und/oder den Steckanschluß (2.5) durchführbar ist, wobei der Stromkreisverteiler (1) mit Halterungen (1.4) zur Aufnahme von handelsüblichen Stiftsammelschienen (3) versehen ist, welche ihrerseits entweder direkt den Steckanschlüssen (2.5) zugeordnet oder nach dem Einfügen in die Halterungen (1.4) derart lagerichtig angeordnet sind, daß beim Aufrasten der Installationsgeräte (2) auf die Tragschiene (1.1) jeweils selbsttätig der elektrische Kontakt zwischen den Anschlußfahnen (3.1) der handelsüblichen Stiftsammelschiene (3) und den betreffenden Steckanschlüssen (2.5) hergestellt ist, wobei der Steckanschluß (2.5) unmittelbar als Teil der Eingangsklemme (2.3) ausgebildet ist und ein einstückiges, in den Gehäusesockel (2.1) einlegbares Bauteil ergibt.

2. Vorrichtung nach Anspruch 1, wobei bei bereits auf die Tragschiene (1.1) des Stromkreisverteilers (1) aufgereihten Installationsgeräten (2) die handelsübliche Stiftsammelschiene (3) gegebenenfalls direkt in die Steckanschlüsse (2.5) eingesetzt ist und so die Installationsgeräte (2) selbst die Halterung (1.4) für die Stiftsammelschiene (3) bilden.

## Claims

1. Device for the connection of electrical accessories (2) in an electrical power distributor (1), on whose mounting rail (1.1) the electrical accessories (2) can be mechanically snapped into place arranged in a bank and can be electrically connected by means of a screw terminal or push-in system to busbars (3) on the input side, such that the electrical accessories (2) have a push-in connector (2.5), in addition to the usual screw terminals (2.3, 2.4). arranged hidden , within their housing base (2,1), electrically linked to their input terminal (2.3), and the electrical connection of the electrical accessories (2) can be carried out either by means of the input terminals (2.3) and/or the push-in connector (2.5) as required, such that the electrical power distributor (1) is provided with holders (1 -4) to accept commercially available pin contact bushars (3), which themselves are either allocated directly to the push-in connectors (2.5) or, after insertion in the holders (1 .4), are arranged correctly positioned so that on snapping the electrical accessories (2) into place on the mounting rail (1.1), the electrical contact is automatically made between the connecting lugs (3. 1) of the commercially available pin contact busbar (3) and the corresponding push-in connectors (2.5), whereby the push-in connector (2.5) is designed as an integral part of the input terminal (2.3) and forms a single-piece component that can be placed in the housing base (2.1).

2. Device according to Claim 1, whereby, with electrical accessories already arranged along the mounting rail (1.1) of the electrical power distributor (1), the commercially available pin contact busbar (3) may be directly inserted into the push-in connectors (2.5) so that the electrical accessories (2) themselves constitute the holder (1.4) for the pin contact busbar (3).

## Revendications

1. Dispositif pour connecter des appareils d'installation (2) électriques dans un tableau de répartition (1), sur le rail-support (1.1) duquel les appareils d'installation (2) peuvent être encliquetés mécaniquement, dans une disposition alignée, et connectés côté entrée à des barres omnibus (3) d'alimentation au moyen d'un système de connexion à vis ou d'un système de connexion à enfichage, les appareils d'installation (2) comportant, en plus des bornes de connexion à vis (2.3, 2.4) habituelles, un contact à enfichage qui est masqué à l'intérieur de leur socle de boîtier (2.1) et est relié de manière conductrice à sa borne d'entrée (2.3), la connexion électrique des appareils d'installation (2) pouvant être réalisée au choix par l'intermédiaire des bornes d'entrée (2.3) et/ou du contact à enfichage (2.5), le tableau de répartition (1) étant pourvu de moyens de support (1.4) destinés à recevoir des barres omnibus (3) d'alimentation du commerce à broches qui, en ce qui les concerne, sont soit directement associées aux contacts à enfichage (2.5), soit sont positionnées après montage dans les moyens de support (1.4) de telle sorte que, lors de l'encliquetage des appareils d'installation (2) sur les rails-supports (1.1), le contact électrique entre les broches de connexion (3.1) des barres omnibus (3) d'alimentation du commerce et les contacts à enfichage (2.5) concernés soit réalisé automatiquement, le contact à enfichage (2.5) étant réalisé directement sous la forme d'une partie de la borne d'entrée (2.3° et constituant ainsi un élément monobloc qui peut être inséré dans le socle de boîtier (2.1).

2. Dispositif selon la revendication 1, dans lequel, lorsque des appareils d'installation (2) sont déjà alignés sur le rail-support (1.1) du tableau de distribution (1), la barre omnibus (3) d'alimentation du commerce est montée directement dans les contacts à enfichage (2.5) et les appareils d'installation (2) eux-mêmes forment les moyens de support (1.4) pour la barre omnibus (3) d'alimentation.
